Europäisches Patentamt

European Patent Office

Office européen des brevets

(19)

(11) Numéro de publication: **0 172 085**
**B1**

(12) **FASCICULE DE BREVET EUROPEEN**

(45) Date de publication du fascicule du brevet:
31.01.90

(51) Int. Cl.⁴: **A 01 G 7/00**

(21) Numéro de dépôt: 85401507.0

(22) Date de dépôt: 22.07.85

(54) Procédé de culture in vitro de champignons à partir de mycorhizes à vésicules et arbuscules.

(30) Priorité: 24.07.84 FR 8411725

(43) Date de publication de la demande:
19.02.86 Bulletin 86/8

(45) Mention de la délivrance du brevet:
31.01.90 Bulletin 90/5

(84) Etats contractants désignés:
AT BE CH DE FR GB IT LI LU NL SE

(56) Documents cités:
EP-A- 0 100 691

(73) Titulaire: CENTRE NATIONAL DE LA RECHERCHE
SCIENTIFIQUE (CNRS), 15, Quai Anatole France,
F-75007 Paris (FR)

(72) Inventeur: Strullu, Désiré-Georges, 20, Allé des Noues
Beaucouze, F-49000 Angers (FR)
Inventeur: Romand, Corinne, F-49112 Pellouailles Les
Vignes (FR)

(74) Mandataire: Warcoin, Jacques et al, Cabinet
Régimbeau 26, avenue Kléber, F-75116 Paris (FR)

## Description

La présente invention concerne un procédé permettant d'obtenir en condition axénique in vitro, des champignons à partir de mycorhizes à vésicules et arbuscules.

L'invention concerne également les produits fertilisants faisant application des champignons obtenus selon ce procédé ou procédé similaire.

Il convient, avant d'aborder les dispositions principales de l'invention, de rappeler les difficultés rencontrées à l'occasion des tentatives de mise en culture pure de tels champignons.

Les travaux scientifiques effectués dans un domaine proche ont déjà permis de produire des inoculums in vitro. Tous les inoculums de champignons mycorhiziens à vésicules et arbuscules produits actuellement in vitro ont été obtenus à partir de spores de ces champignons.

Les mycéliums des champignons mycorhiziens à vésicules et arbuscules, issus de spores germées en conditions stériles, ne se cultivent actuellement qu'en présence d'une plante-hôte ou d'une partie de celle-ci. La culture in vitro de ces mycéliums sur un milieu minéral et organique, sans plante-hôte, n'a pas été réalisée.

Les procédés de culture en présence d'une plante-hôte réalisés in vitro sont difficiles à mettre en œuvre. En effet, il faut cultiver dans un même milieu nutritif deux organismes ayant des besoins différents pour avoir un développement optimal. Il existe aussi plusieurs procédés de production d'inoculums de champignons endomycorhiziens à vésicules et arbuscules à partir de spores ou de racines mycorhizées en conditions non stériles. Tous ces procédés non axéniques présentent l'inconvénient de constituer une source d'introduction de microorganismes pathogènes.

Ainsi, la demande de brevet EP-A-100 691 décrit un procédé d'obtention in vitro de champignons endomycorhiziens à vésicules et arbuscules utilisant une technique de stérilisation des spores. Toutefois, ce procédé est très lourd car il passe par l'utilisation de racines transformées sous l'action d'Agrobacterium rhizogenes. En outre, un grand nombre d'étapes de ces procédés ont des rendements qui sont très aléatoires.

La présente invention a, en conséquence, pour but de fournir tout d'abord un procédé de culture permettant d'obtenir in vitro, en milieu stérile, des champignons formant des mycorhizes à vésicules et arbuscules aux fins de favoriser la nutrition minérale des plantes d'intérêt agronomique telles que blé, maïs, pois, pomme de terre, tomate, soja, trèfle, oignon, fraisier, asperge. Des espèces d'intérêt horticole sont aussi concernées (tulipe, rosier) ainsi que des essences forestières précieuses (frêne, merisier, tulipier).

Un autre but de l'invention est de fournir des champignons endomycorhiziens à vésicules et arbuscules n'ayant pas de spécificité d'hôte et permettant de mycorhizer un très grand nombre d'espèces végétales qui ne se limitent donc pas à celles rapportées ci-dessus à titre d'exemple.

L'invention concerne à cet effet un procédé de préparation de mycélium et/ou de mycorhizes de champignons Endogonacées, notamment du genre Glomus, en condition axénique in vitro, caractérisé en ce qu'il consiste à prélever des mycorhizes à vésicules et arbuscules sur des structures fongiques d'origine intraracinaire, à les nettoyer, à les stériliser en condition axénique, c'est-à-dire à stériliser les racines mycorhizées sans détruire les mycorhizes à vésicules et arbuscules dans les racines, puis à placer en culture les mycorhizes sur un milieu nutritif gélosé stérile pourvu d'éléments minéraux, de vitamines, en particulier du groupe B, et de sucre et à récupérer les mycorhizes et/ou les mycélium après croissance.

Bien que le nettoyage des mycorhizes à vésicules et arbuscules soit, de préférence, effectué par ultrasons, il est possible d'utiliser d'autres techniques de nettoyage.

De même, la stérilisation peut mettre en œuvre des solutions désinfectantes telles que des antibiotiques ou l'hypochlorite de calcium, seuls ou successivement, mais d'autres types de stérilisation sont également utilisables.

Bien entendu, si les mycorhizes à vésicules et arbuscules sont stériles au départ, il n'y a pas lieu de les désinfecter.

Le procédé permet d'obtenir des mycélium et des mycorhizes en conditions stériles, ce qui autorise leur exportation sans problème sanitaire.

Enfin, les vitamines du groupe B qui peuvent être mises en œuvre peuvent être notamment: le panthothénate de calcium, la biotine, l'acide nicotinique, la pyridoxine ($B_6$), la thiamine ($B_1$).

Suivant une caractéristique de ce procédé, on produit un inoculum utilisable pour la mycorhization de plants en milieu de culture stérile ou non. Les mycorhizes obtenues peuvent elles-mêmes être utilisées pour produire du mycélium ou provoquer la mycorhization. .

D'autres caractéristiques et avantages du présent procédé ressortiront encore de la description détaillée ci-après d'un mode de réalisation du présent procédé et des dessins illustrant à titre d'exemple une racine mère ayant produit le mycélium en milieu stérile.

### EXEMPLE 1

Suivant l'invention, des racines de fraisiers sont prélevées sur des plantes-hôtes issues de conditions naturelles ou mycorhizées en pots. La mycorhization est vérifiée par les techniques de coloration classiques.

Les mycorhizes sont vibrées aux ultrasons durant 15 minutes environ puis fragmentées en segments de 0,3 à 1 cm. Ces segments sont ensuite désinfectés par passage dans une solution d'alcool à 95° pendant 2 à 10 minutes et rincés à l'eau distillée stérile. Sous hôte stérile, les échantillons sont désinfectés par passage dans une solution d'hypochlorite de calcium à 6% durant 1 à 10 minutes puis rincés trois fois à l'eau distillée stérile. La désinfection est enfin réalisée par passage dans une solution antibiotique (200 ppm streptomycine + 2% chloramine T) durant 5 à 20 minutes puis rinçage à l'eau distillée stérile.

Les fragments de racines sont mis en culture à l'obscurité à 25 °C, notamment dans des boîtes de Pétri contenant le milieu suivant:

a) Eléments minéraux (Hepper, 1981)

| | Macroéléments mg.$l^{-1}$ |
|---|---|
| – KNO$_3$: | 303 |
| – Ca (NO$_3$)$_2$, 4H$_2$O: | 2040 |
| – MgSO$_4$, 7H$_2$O: | 368 |
| – KH$_2$PO$_4$: | 44 |
| – FeNaEDTA: | 65 |
| | Oligoéléments mg.$l^{-1}$ |
| – MnSO$_4$, 4H$_2$O: | 2,23 |
| – CuSO$_4$, 5H$_2$O: | 0,24 |
| – ZnSO$_4$, 7H$_2$O: | 0,29 |
| – H$_3$BO$_3$: | 1,86 |
| – (NH$_4$)$_6$Mo$_7$O$_{24}$, 4H$_2$O: | 0,035 |

b) Vitamines du groupe B mg.$l^{-1}$

| | |
|---|---|
| – Panthothénate de Ca: | 1 |
| – Biotine: | 0,01 |
| – Acide nicotinique: | 1 |
| – Pyridoxine (B$_6$): | 1 |
| – Thiamine (B$_1$): | 1 |
| – Vitamine B$_{12}$: | 0,5 |

c) Saccharose 15 g.$l^{-1}$
d) Gélose 7 g.$l^{-1}$
e) pH avant autoclavage 7.

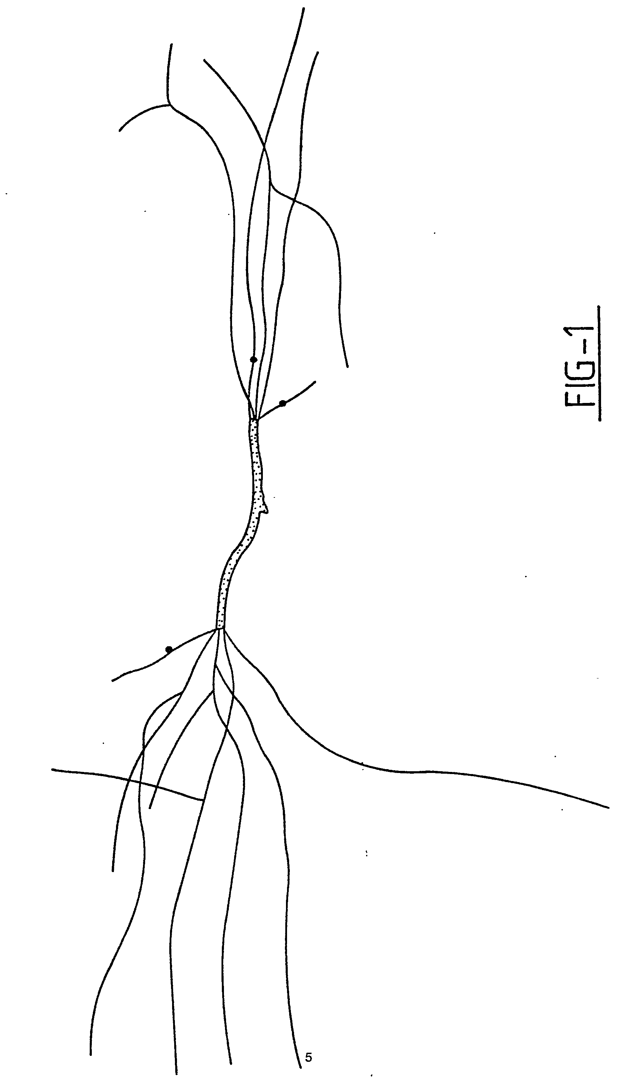

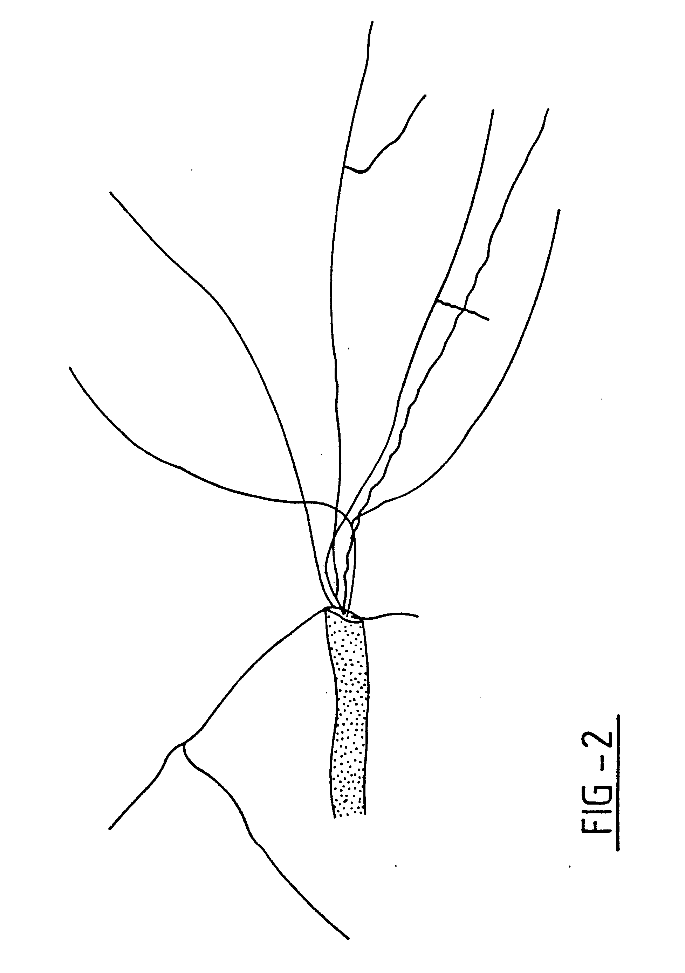

Au bout de quelques jours, on observe la croissance d'hyphes mycéliennes à partir de sections racinaires. Parfois, des hyphes sortent aussi des racines en franchissant l'épiderme. L'aspect des cultures est présenté dans les figures 1 et 2. Les filaments forment un réseau lâche peu ramifié d'hyphes grêles.

EXEMPLE 2

On observe des résultats équivalents en suivant le processus de l'exemple 1 mais en partant de racines de tulipiers ou de luzerne.

EXEMPLE 3

On observe des résultats équivalents en suivant le processus de l'exemple 1, mais en partant de racines mycorhizées en conditions stériles.

Dans cet exemple, on peut avantageusement utiliser des légumineuses comme le trèfle. Il est évident qu'il n'est pas nécessaire de désinfecter ces racines mycorhizées en conditions stériles.

**Revendications**

1. Procédé de préparation de mycélium et/ou de mycorhizes de champignons Endogonacées, notamment du genre Glomus, en condition axénique in vitro, caractérisé en ce qu'il consiste à prélever des mycorhizes à vésicules et arbuscules sur des structures fongiques d'origine intraracinaire, à les nettoyer, à les stériliser en condition axénique, c'est-à-dire à stériliser les racines mycorhizées sans détruire les mycorhizes à vésicules et arbuscules dans les racines, puis à placer en culture les mycorhizes sur un milieu nutritif gélosé stérile pourvu d'éléments minéraux, de vitamines, en particulier du groupe B, et de sucre et à récupérer les mycorhizes et/ou les mycéliums après croissance.

2. Procédé selon la revendication 1, caractérisé en ce que la stérilisation est effectuée par immersion des mycorhizes dans au moins une solution désinfectante.

3. Procédé selon la revendication 2, caractérisé en ce que la solution désinfectante comporte un antibiotique.

4. Procédé selon l'une des revendications 2 et 3, caractérisé en ce que la solution désinfectante est une solution d'hypochlorite de calcium.

5. Procédé selon l'une des revendications 1 à 4, caractérisé en ce que le nettoyage est effectué par un traitement ultrasonore.

6. Procédé selon l'une des revendications 1 à 5, caractérisé en ce que les vitamines du groupe B présentes dans le milieu nutritif sont choisies parmi le panthothénate de calcium, la biotine, l'acide nicotinique, la pyridoxine, la thiamine et la vitamine B12.

7. Application des mycéliums et/ou mycorhizes obtenus par le procédé selon l'une des revendications 1 à 6 à titre d'agent de mycorhization de racines de plantes d'intérêt agronomique.

**Claims**

1. A process for preparing in vitro in an axenic condition mycelium and/or mycorrhizae of fungi of the type Endogonaceae, especially of the genus Glomus, which process consists in removing vesicular-arbuscular mycorrhizae, on fungical structures originating from intra roots, cleaning them and sterilizing them, in axenic condition, that is to say sterilizing the mycorrhizae roots without destroying the vesicular-arbuscular mycorrhizae in the roots, and then placing the mycorrhizae in culture on a sterile agar nutrient medium provided with mineral elements, vitamins, especially of the B group, and sugar and to recover the mycorrhizae and/or mycelium after growth.

2. The process as claimed in claim 1, wherein the sterilization is performed by immersing the mycorrhizae in at least one disinfectant solution.

3. The process as claimed in claim 2, wherein the disinfectant solution contains an antibiotic.

4. The process as claimed in one of claims 2 and 3, wherein the disinfectant solution is calcium hypochlorite solution.

5. The process as claimed in one of claims 1 to 4, wherein the cleaning is performed by an ultrasonic treatment.

6. The process as claimed in one of claims 1 to 5, wherein the vitamins of the B group present in the nutrient medium are chosen from calcium panthothenate, biotin, nicotinic acid, pyridoxine, thiamine and vitamin B$_{12}$.

7. Application of mycelium and/or mycorrhizae obtained by a process of claims 1 to 6 by way of agent for roots mycorrhization of interesting plants.

**Patentansprüche**

1. Verfahren zur Herstellung von Myzelium und/oder Mykorrhizen von Endogonaceen Pilzen, insbesondere der Gattung Glomus, in axenischem Zustand, in vitro, dadurch gekennzeichnet, daß es darin besteht Vesikular- und Arbuskular-Mykorrhizen an Pilz-Strukturen mit Ursprung aus dem Inneren von Wurzeln, zu entnehmen, sie zu reinigen, unter axenischen Bedingungen zu sterilisieren, d.h. die Mykorrhizen-haltigen Wurzeln zu sterilisieren, ohne die Vesikular- und Arbuskular-Mykorrhizen in den Wurzeln zu zerstören, dann die Mykorrhizen auf ein steriles Gelose-haltiges Nährmedium, das mit Mineralelementen, Vitaminen, insbesondere aus der Gruppe B, und Zucker versorgt ist, als Kultur aufzubringen und die Mykorrhizen und/oder das Myzelium nach dem Wachstum zu ernten.

2. Verfahren nach Anspruch 1, dadurch gekennzeichnet, daß die Sterilisation durch Eintauchen der Mykorrhizen in mindestens eine desinfizierende Lösung bewirkt wird.

3. Verfahren nach Anspruch 2, dadurch gekennzeichnet, daß die desinfizierende Lösung ein Antibiotikum umfaßt.

4. Verfahren nach einem der Ansprüche 2 und 3, dadurch gekennzeichnet, daß die desinfizierende Lösung eine Calciumhypochlorit-Lösung ist.

5. Verfahren nach einem der Ansprüche 1 bis 4, dadurch gekennzeichnet, daß die Reinigung durch eine Ultraschallbehandlung bewirkt wird.

6. Verfahren nach einem der Ansprüche 1 bis 5, dadurch gekennzeichnet, daß die Vitamine der Gruppe B, die in dem Nährmedium vorhanden sind, ausgewählt werden unter Calciumpanthothenat, Biotin, Nikotinsäure, Pyridoxin, Thiamin und Vitamin B12.

7. Verwendung des Myzeliums und/oder der Mykorrhizen, erhalten nach dem Verfahren eines der Ansprüche 1 bis 6, als Mittel zur Mykorrhizenbildung bei Wurzeln von landwirtschaftlich interessanten Pflanzen.

FIG-1

EP 0 172 085 B1

FIG -2

EP 0 172 085 B1